# EUROPEAN PATENT APPLICATION

(11) **EP 4 750 100 A1**
(43) Date of publication of application: **27.05.2026**
(21) Application number: 23945434.1
(22) Date of filing: 18.07.2023
(51) Int. Cl.: H04W 4/18

(54) **INFORMATION INDICATION METHOD, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/108012
(87) International publication number: WO 2025/015539

(57) **Abstract**

Embodiments of the present disclosure provide an information indication method, a communication device, a communication system, and a storage medium. The method comprises: a first device determines a format for sending information, wherein the first device sends the information under the excitation of a first signal of a second device. According to the technical solution provided by the embodiments of the present disclosure, the efficiency of information transmission between the first device and the second device is improved without increasing the communication costs, and the transmission of redundant information is reduced, thereby reducing the signaling overhead; and additionally, the first device is enabled to gather the signal energy provided by the first signal to transmit information that needs to be transmitted, thereby improving the transmission reliability of the information content of the first device.

## Description

### TECHNICAL FIELD

The disclosure relates to the field of communication technology, and in particular to an information indication method, a communication device, a communication system, and a storage medium.

### BACKGROUND

An ambient power enabled Internet of Things (IoT) device is an IoT device that supports ambient power. In a specific usage scenario, energy from ambiences may be used to power the IoT device. Compared with a narrowband Internet of Things (NB-IoT) device, complexity and costs of the ambient-IoT device are lower.

### SUMMARY

With development of the communication technology, transmission information in a suitable format may be used to reduce signaling overhead and/or improve transmission reliability.

Embodiments of the disclosure provide an information indication method, a first device, a second device, a communication system, and a storage medium.

According to a first aspect of embodiments of the disclosure, an information indication method is provided. The method includes: determining, by a first device, a format for sending information, in which the first device sends the information upon excitation of a first signal of a second device.

According to a second aspect of embodiments of the disclosure, an information indication method is provided. The method includes: determining a format for sending information by a first device, in which the first device sends the information upon excitation of a first signal of a second device.

According to a third aspect of embodiments of the disclosure, an information indication method is provided. The method includes: a first device determining a format for sending information, in which the first device sends the information upon excitation of a first signal of a second device.

According to a fourth aspect of embodiments of the disclosure, a first device is provided. The first device includes: a first determination module, configured to determine a format for sending information, in which the first device sends the information upon excitation of a first signal of a second device.

According to a fifth aspect of embodiments of the disclosure, a second device is provided. The second device includes: a second determination module, configured to determine a format for sending information by a first device, in which the first device sends the information upon excitation of a first signal of the second device.

According to a sixth aspect of embodiments of the disclosure, a communication system is provided. The communication system includes: a first device and a second device, in which the first device is configured to implement the information indication method provided in the first aspect, and the second device is configured to implement the information indication method provided in the second aspect.

According to a seventh aspect of embodiments of the disclosure, a communication device is provided. The communication device includes one or more processors. The one or more processors are configured to call instructions to cause the communication device to perform the information indication method provided in the first aspect or the second aspect.

According to an eighth aspect of embodiments of the disclosure, a storage medium is provided. The storage medium stores instructions that, when running on a communication device, cause the communication device to perform the information indication method provided in the first aspect or the second aspect.

The technical solution provided by embodiments of the present disclosure enables the information content of the information sent by the first device upon the excitation of the first signal to be more compatible with the first device, thus improving an efficiency of information transmission between the first device and the second device without increasing the communication cost, reducing the transmission of redundant information, which may reduce signaling overhead, and enable the first device to concentrate the signal energy provided by the first signal to transmit the information to be transmitted, and improve transmission reliability of the information content of the first device.

It is noted that the above general description and the following detailed description are merely illustrative and explanatory, which do not constitute a limitation on embodiments of the present disclosure.

### BRIEF DESCRIPTION OF THE DRAWINGS

The accompanying drawings, which are incorporated in and constitute a part of the description, illustrate embodiments consistent with the present disclosure and, serve to explain the principles of embodiments of the present disclosure together with the description.
FIG. 1a is a schematic diagram illustrating an architecture of a communication system according to an embodiment of the disclosure.
FIG. 1b is a schematic diagram illustrating wireless communication based on a backscatter communication mechanism according to an embodiment of the disclosure.
FIG. 1c is a topological diagram illustrating wireless communication using a backscatter communication mechanism according to an embodiment of the disclosure.
FIG. 1d is a schematic diagram illustrating wireless communication based on a backscatter communication mechanism according to an embodiment of the disclosure.
FIG. 1e is a topological diagram illustrating wireless communication using a backscatter communication mechanism according to an embodiment of the disclosure.
FIG. 1f is a topological diagram illustrating wireless communication using a backscatter communication mechanism according to an embodiment of the disclosure.
FIG. 1g is a schematic diagram illustrating a device for performing wireless communication using three backscatter communication mechanisms according to an embodiment of the disclosure.
FIG. 2a is a flowchart illustrating an information indication method according to an embodiment of the disclosure.
FIG. 2b is a flowchart illustrating an information indication method according to an embodiment of the disclosure.
FIG. 3a is a flowchart illustrating an information indication method according to an embodiment of the disclosure.
FIG. 3b is a flowchart illustrating an information indication method according to an embodiment of the disclosure.
FIG. 3c is a flowchart illustrating an information indication method according to an embodiment of the disclosure.
FIG. 4a is a flowchart illustrating an information indication method according to an embodiment of the disclosure.
FIG. 4b is a flowchart illustrating an information indication method according to an embodiment of the disclosure.
FIG. 4c is a flowchart illustrating an information indication method according to an embodiment of the disclosure.
FIG. 5 is a flowchart illustrating an information indication method according to an embodiment of the disclosure.
FIG. 6a is a flowchart illustrating an information indication method according to an embodiment of the disclosure.
FIG. 6b is a flowchart illustrating an information indication method according to an embodiment of the disclosure.
FIG. 7a is a schematic diagram illustrating a structure of a first device according to an embodiment of the disclosure.
FIG. 7b is a schematic diagram illustrating a structure of a second device according to an embodiment of the disclosure.
FIG. 8a is a schematic diagram illustrating a structure of a UE according to an embodiment of the disclosure.
FIG. 8b is a schematic diagram illustrating a structure of a communication device according to an embodiment of the disclosure.

### DETAILED DESCRIPTION

Embodiments of the disclosure provide an information indication method and an apparatus, a communication device, a communication system, and a storage medium.

In a first aspect, embodiments of the disclosure provide an information indication method. The method includes: determining, by a first device, a format for sending information, in which the first device sends the information upon excitation of a first signal of a second device.

In the above embodiment, the first determines the format for sending the information, to enable the information content of the information sent by the first device upon the excitation of the first signal to be more compatible with the first device, thus improving an efficiency of information transmission between the first device and the second device without increasing the communication cost, reducing the transmission of redundant information, which may reduce signaling overhead, and enable the first device to concentrate the signal energy provided by the first signal to transmit the information to be transmitted, and improve transmission reliability of the information of the first device.

In combination with some embodiments of the first aspect, in some embodiments, data frames in different formats carry different information.

In the above embodiment, with carrying the different information through the data frames in the different formats, the format of the data frame may be determined according to information that the first device can transmit or information that the second device expects to acquire, which may reduce redundant information carried in the data frame.

In combination with some embodiments of the first aspect, in some embodiments, the format includes at least one of:
a first format, in which a data frame in the first format carries service information;
a second format, in which a data frame in the second format carries control information;
a third format, in which a data frame in the third format carries identification information;
a fourth format, in which a data frame in the fourth format carries identification information and service information;
a fifth format, in which a data frame in the fifth format carries identification information and control information;
a sixth format, in which a data frame in the sixth format carries identification information, service information and control information; or
a seventh format, in which a data frame in the seventh format carries service information and control information.

In the above embodiment, the data frame of the information sent by the first device may include any one or more of pieces of the service information, the control information, or the identification information, so that the first device may determine the format of the data frame according to the specific information it needs to send, which may improve format flexibility of the data frame and adaptability of information and format.

In combination with some embodiments of the first aspect, in some embodiments, the data frame includes: an indicator, indicating the format.

In the above embodiment, with carrying the indicator in the data frame, the indicator is used to indicate the format of the data frame, so that the second device may accurately determine the format and the information used by the first device based on the indicator, facilitating rapid decoding by the second device.

In combination with some embodiments of the first aspect, in some embodiments, the indicator further indicates a length of the data frame.

In the above embodiment, the indicator may further indicate the length of the data frame to assist the second device in determining the length of the data frame before acquiring the information content included in the data frame, which may improve an efficiency and an accuracy of decoding the data frame.

In combination with some embodiments of the first aspect, in some embodiments, the indicator includes at least one of:
a first indicator, indicating relevant information of the identification information in the data frame;
a second indicator, indicating relevant information of the service information in the data frame; or
a third indicator, indicating relevant information of the control information in the data frame.

In the above embodiment, the first indicator, the second indicator and/or the third indicator may be carried in the data frame for different information contents included in the data frame, which may accurately indicate the information included in the data frame using the above indicator.

In combination with some embodiments of the first aspect, in some embodiments, the first indicator indicates at least one of:
whether the data frame carries identification information;
an identification type of identification information carried by the data frame; or
a data length of identification information carried by the data frame.

In the above embodiment, with using the first indicator to indicate whether the data frame carries the identification information, and the identification type and/or the data length of the carried identification information, the second device may complete decoding of the identification information in the data frame sent by the first device based on the first indicator.

In combination with some embodiments of the first aspect, in some embodiments, pieces of identification information with different identification types have different data lengths;
and/or,
pieces of identification information with the same identification type have different data lengths.

In the above embodiment, the first device may determine whether it is necessary to set the identification type and/or the data length indicated by the first indicator corresponding to the identification information based on whether the identification type of the identification information corresponds to a plurality of data lengths, which may reduce the amount of information that needs to be indicated by the first indicator while ensuring that the second device decodes correctly.

In combination with some embodiments of the first aspect, in some embodiments, the identification information includes:
a recognizable identifier;
   or,
an identification sequence obtained by processing the recognizable identifier based on a preset algorithm.

In the above embodiment, the first device may determine the recognizable identifier or the identification sequence obtained by processing the recognizable identifier based on the preset algorithm as the identification information and send the identification information to the second device, which may improve reliability of communication between the first device and the second device.

In combination with some embodiments of the first aspect, in some embodiments, the preset algorithm includes at least one of:
an encryption algorithm;
an error correction algorithm; or
an error detection algorithm.

In the above embodiment, the first device may process the recognizable identifier based on the encryption algorithm, the error correction algorithm and/or the error detection algorithm, to improve flexibility of processing while ensuring security or reliability of communication.

In combination with some embodiments of the first aspect, in some embodiments, the second indicator indicates at least one of:
whether the data frame carries service information; or
a data length of service information carried by the data frame.

In the above embodiment, with using the second indicator to indicate whether the data frame carries the service information and/or the data length of the carried service information, the second device may complete decoding of the service information in the data frame sent by the first device based on the second indicator.

In combination with some embodiments of the first aspect, in some embodiments, the third indicator indicates at least one of:
whether the data frame carries control information; or
a format of control information carried by the data frame.

In the above embodiment, with using the third indicator to indicate whether the data frame carries the control information and/or the format of the carried control information, the second device may complete decoding of the control information in the data frame sent by the first device based on the third indicator.

In combination with some embodiments of the first aspect, in some embodiments, the format of the control information includes at least one of:
an eighth format, in which the control information in the eighth format carries acknowledgment (ACK) information or negative acknowledgment (NACK) information; or
a ninth format, in which the control information the ninth format carries ACK information, or NACK information and a failure cause.

In the above embodiment, the control information in the different formats is used to enable the first device to determine whether to carry information about the cause of failure in the control information according to its own requirement or capability, thus responding to a control instruction of the second device.

In combination with some embodiments of the first aspect, in some embodiments, determining, by the first device, the format for sending the information comprises:
determining the format of the data frame as determined by the first device itself; or
determining the format of the data frame as specified by the second device.

In the above embodiment, the format of the data frame sent by the first device may be determined by the first device itself, or may be specified by the second device, such that the information content carried by the data frame sent by the first device may be more suitable for the first device, or may be more suitable for expectations of the second device.

In combination with some embodiments of the first aspect, in some embodiments, the format of the data frame is determined by the first device itself, and the data frame sent by the first device at least includes an indicator.

In the above embodiment, in a case where the first device determines the format of the data frame to be sent by itself, the first device needs to carry the indicator in the data frame, to use the indicator to inform the second device of the information content included in the data frame, such that the second device may correctly decode the information content of the data frame.

In combination with some embodiments of the first aspect, in some embodiments, encoding of the indicator carried by the data frame is independent of encoding of information carried by the data frame.

In the above embodiment, the first device may encode the indicator of the data frame and the content carried by the data frame independently, such that in a case where the second device decodes the data frame, the decoding of the indicator may be independent of the decoding of the content.

In combination with some embodiments of the first aspect, in some embodiments, the method further includes: receiving indication information sent by the second device, in which the indication information indicates the format of the data frame specified by the second device.

In the above embodiment, the first device may receive the indication information sent by the second device to learn the format of the data frame as specified by the second device, and then send the information to the second device based on the format of the data frame as specified.

In combination with some embodiments of the first aspect, in some embodiments, the method includes: determining the format of the data frame according to a protocol agreement; or, determining the format of the data frame according to a device type of the first device; or, determining the format of the data frame according to an application scenario of the first device.

In the above embodiments, the format for sending the data frame by the first device may be determined based on the protocol pre-agreed, the device type or the application scenario of the first device, such that the information content included in the data frame is more flexible or more adapted to the capability or the specific application scenario of the first device.

In combination with some embodiments of the first aspect, in some embodiments, the first device includes:
a first type of device without having capabilities of energy storage and signal generation.
a second type of device having a capability of energy storage without having a capability of signal generation;
a third type of device having capabilities of energy storage and signal generation.

In the above embodiment, by limiting the subject matter of the above method to any first device among a plurality of different types of first devices, an application scope of the above method is increased, and the different types of first devices may determine the format of the data frame as required, which may improve a communication efficiency with the second device without increasing communication burden.

In a second aspect, embodiments of the disclosure provide an information indication method. The method includes: determining a format for sending information by a first device, in which the first device sends the information upon excitation of a first signal of a second device.

In the above embodiment, the second device may determine the format of sending the information by the first device. On the one hand, the information content of the information sent by the first device upon the excitation of the first signal of the second device may be flexibly determined as required and is more compatible with the first device. On the other hand, it is convenient for the second device to learn the specific content of the information sent by the first device based on the format of the information in a case of receiving the information sent by the first device based on the excitation of the first signal, which may improve the efficiency of information transmission between the first device and the second device, without increasing communication costs, and reduce transmission of redundant information.

In a third aspect, embodiments of the disclosure provide an information indication method. The method includes: a first device determining a format for sending information, in which the first device sends the information upon excitation of a first signal of a second device.

In a fourth aspect, embodiments of the disclosure provide a first device. The first device includes: a first determination module, configured to determine a format for sending information, in which the first device sends the information upon excitation of a first signal of a second device.

In a fifth aspect, embodiments of the disclosure provide a second device. The second device includes: a second determination module, configured to determine a format for sending information by a first device, in which the first device sends the information upon excitation of a first signal of the second device.

In a sixth aspect, embodiments of the disclosure provide a communication system. The communication system includes: a first device and a second device, in which the first device is configured to implement the information indication method as described in optional implementations of the first aspect, and the second device is configured to implement the information indication method as described in optional implementations of the second aspect.

In a seventh aspect, embodiments of the disclosure provide a communication device. The communication device includes one or more processors. The one or more processors are configured to call instructions to cause the communication device to perform the information indication method as described in optional implementations of the first aspect or the second aspect.

In an eighth aspect, embodiments of the disclosure provide a storage medium. The storage medium stores instructions that, when running on a communication device, cause the communication device to perform the information indication method as described in optional implementations of the first aspect or the second aspect.

In a ninth aspect, embodiments of the disclosure provide a program product that, when executed by a communication device, causes the communication device to implement the information indication method as described in optional implementations of the first aspect or the second aspect.

In a tenth aspect, embodiments of the disclosure provide a computer program that, when running on a computer, causes the computer to implement the information indication method as described in optional implementations of the first aspect or the second aspect.

It may be understood that a first information indication apparatus, a second information indication apparatus, the communication device, the communication system, the storage medium, the program product, and the computer program are all used to implement the method in embodiments of the disclosure. Thus, regarding beneficial effects they may achieve, reference may made be to the beneficial effects in the corresponding methods, which may not be repeated herein.

Embodiments of the disclosure provide an information indication method and an apparatus, a communication device, a communication system, and a storage medium. In some embodiments, terms such as "information indication method", "information processing method" and "information transmission method" may be used interchangeably, terms such as "information indication apparatus", "information processing apparatus", and "information transmission apparatus" may be used interchangeably, and terms such as "information processing system" and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In each embodiment of the disclosure, unless otherwise specified or there is a logical conflict, the terms, and/or descriptions between embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one selected from A and B for execution (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one selected from A and B for execution (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity, or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "comprising A", "including A", "used to indicate A", and "carrying A" may be interpreted as directly carrying A or indirectly indicating A.

In some embodiments, the terms such as "in response to...", "in response to determining...", "in a case of/that...", "when", "upon...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus and the device may be interpreted as physical or virtual, and their names are not limited to the names recorded in embodiments. In some cases, the apparatus and the device may also be understood as "apparatus", "equipment", "device", "circuit", "network element", "node", "function", "unit", "section", "system", "network", "chip", "chip system", "entity", and "subject", etc.

In some embodiments, the term such as "network" may be interpreted as an apparatus (e.g., an access network device, a core network device, etc.) included in the network.

In some embodiments, "access network device (AN device)" may be referred to as "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "BWP" and the like.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, an access network device, a core network device, or the network device may be replaced by the terminal. For example, various embodiments of the present disclosure may also be applied to a structure in which communication between the access network device, the core network device, or the network device and the terminal is replaced by the communication between a plurality of terminals (for example, device-to-device (D2D), vehicle-to-everything (V2X), etc.). In this case, it may also be set as a structure in which the terminal has all or part of the functions of the access network device. In addition, terms such as "uplink" and "downlink" may also be replaced by terms corresponding to communication between terminals (for example, "side"). For example, "uplink channel", "downlink channel", etc. may be replaced by "side channel", and "uplink", "downlink", etc. may be replaced by "sidelink".

In some embodiments, the terminal may be replaced by the access network device, the core network device, or the network device. In this case, the access network device, the core network device, or the network device may also be configured to have a structure that has all or part of the functions of the terminal.

In some embodiments, acquisition of data, information, etc. may comply with the laws and regulations of the country where the data is obtained.

In some embodiments, data, information, etc. may be obtained with the consent from users.

In addition, each element, each row, or each column in the table of embodiments of the disclosure may be implemented as an independent embodiment, and the combination of any elements, any rows, or any columns may also be implemented as an independent embodiment.

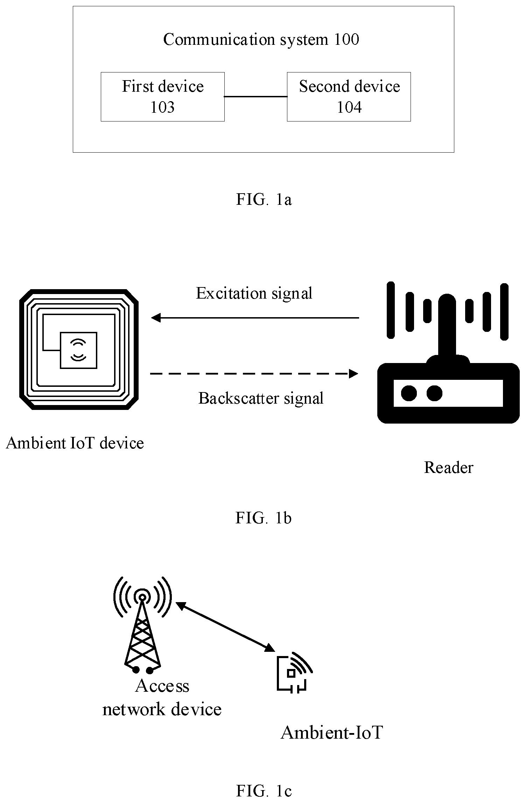

FIG. 1a is a schematic diagram illustrating an architecture of a communication system according to an embodiment of the disclosure.

As shown in FIG. 1a, the communication system 100 may include a first device 103 and a second device 104. In some embodiments, the second device 104 may include, but is not limited to, a terminal, an access network device, an intermediate node, and a secondary node.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU, which is centrally controlled by the CU, but is not limited herein.

It may be understood that the communication system described in embodiments of the disclosure aims to more clearly illustrate the technical solution of embodiments of the disclosure, and does not constitute a limitation on the technical solution disclosed in embodiments of the disclosure. A person skilled in the art may know that with the evolution of the system architecture and the emergence of new service scenarios, the technical solution disclosed in embodiments of the disclosure are also applicable to similar technical problems.

The following embodiments of the disclosure may be applied to the communication system 100 or part of the subjects shown in FIG. 1a, but are not limited herein. The subjects shown in FIG. 1a are examples, and the communication system may include all or part of the subjects in FIG. 1a, or may include other subjects other than those shown in FIG. 1a. The number and form of the subjects are arbitrary. The subjects may be physical or virtual. The connection relationship between the subjects is an example. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-wideband (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

Energy obtained from ambiences may drive data transmission and wireless communication of sensing nodes. Existing mainstream low-power IoT communication chips (such as BLE, LoRa, NB-IoT) have a power consumption of tens or even hundreds of milliwatts for transmission and reception, while the energy obtained by energy harvesting from the ambiences is only at a microwatt level, which cannot drive these types of nodes to operate. Therefore, a new wireless communication technology is needed to reduce the communication energy consumption to tens of microwatts or even less than ten microwatts. The current mainstream method uses backscatter communication technology. The backscatter communication is one of key technologies for building a green, energy-saving, low-cost, and flexibly deployable future Internet of Things, and is an important means to achieve "intelligent connection of all things". The methods that can be used include the backscatter communication technology.

The first device 103 as illustrated in FIG. 1a may be any device that performs wireless communication using the backscatter communication mechanism.

As illustrated in FIG. 1b, the backscatter communication mechanism may be: a wireless communication mechanism that utilizes the principle of backscattering of radio frequency signals and uses the modulation and transmission technology with extremely low power consumption. A reader sends a physical layer signal to an ambient IoT device. The physical layer signal may be various AC signals such as pulse signals. In some embodiments, the physical layer signal is used to provide energy for the ambient IoT device to transmit signals. Therefore, the physical layer signal may be referred to as an excitation signal or a trigger signal. In an example, since a part of the excitation signal may be reflected when the excitation signal reaches the ambient IoT device, the ambient IoT device may adjust matching between a receiving antenna and an impedance according to information to be sent, enhance reflection of the incident excitation signal, and modulate perception data obtained by the ambient IoT device itself onto the reflected signal to complete transmission of data. This procedure is similar to a reflector. Compared with other communication technologies, the backscatter communication does not require a complex radio frequency structure, reduces usage of devices such as a power amplifier, a high-precision crystal oscillator, a duplexer, and a high-precision filter, and does not require complex baseband processing. Therefore, it may simplify the design of the ambient IoT device and greatly reduce node costs of the ambient IoT device. The ambient IoT device is an IoT device that use ambient energy to operate. The ambient energy may include signal energy of the aforementioned wireless signal, and may also include other ambient capabilities such as geothermal energy and/or light energy.

Here, a device that sends the physical layer signal to the ambient IoT device and triggers the ambient IoT device to return a reflected signal may be referred to as an anchor point of the reader of the ambient IoT device.

It is noted that the ambient IoT device is a device that performs the wireless communication using the backscatter communication mechanism. In a specific implementation, there are other devices that may perform the wireless communication using the backscatter communication mechanism.

The anchor point or the reader of the ambient IoT device may be a network node of a wireless communication network, such as an access network device, a relay node (or intermediate node), or a terminal.

A network topology for the backscatter communication may include one of the following topologies.

Topology 1: as shown in FIG. 1c, an ambient IoT device and an access network device perform uplink (UL) and downlink (DL) data transmission directly.

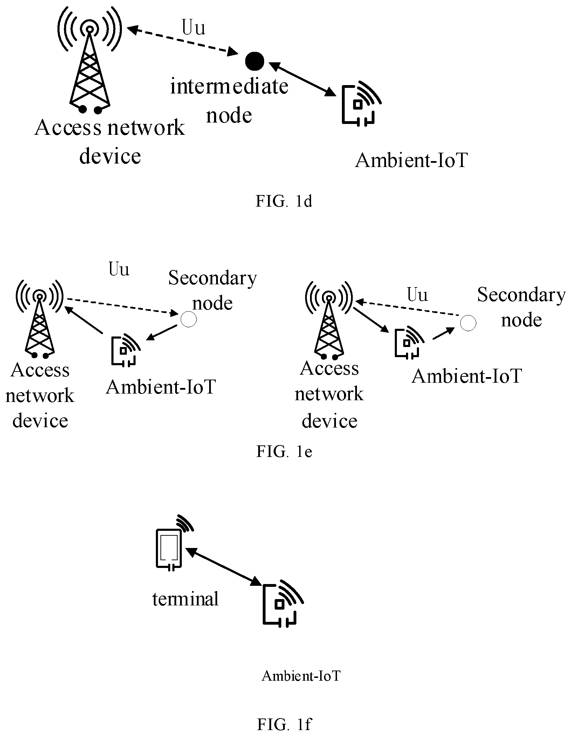

Topology 2: as shown in FIG. 1d, an ambient IoT device and an access network device perform DL and UL data transmission indirectly. There is an intermediate node (or secondary node) in the middle to forward the data. For example, the intermediate node may be a relay, an integrated access backhaul (IAB), a user equipment (UE), and a repeater (RP).

Topology 3: as shown in FIG. 1e, an ambient IoT device and an access network device directly perform data reception or transmission on a DL or a UL. Then there is a secondary node on the UL or the DL, and the secondary node is responsible for receiving or sending UL data or receiving DL data. For example, the secondary node may be a relay, an IAB node, a terminal, or a network controlled repeater (NCR).

Topology 4: as shown in FIG. 1f, an ambient IoT device and a UE directly perform reception or transmission of DL and UL data. The UE is responsible for collecting data and forwarding the collected data to the network side.

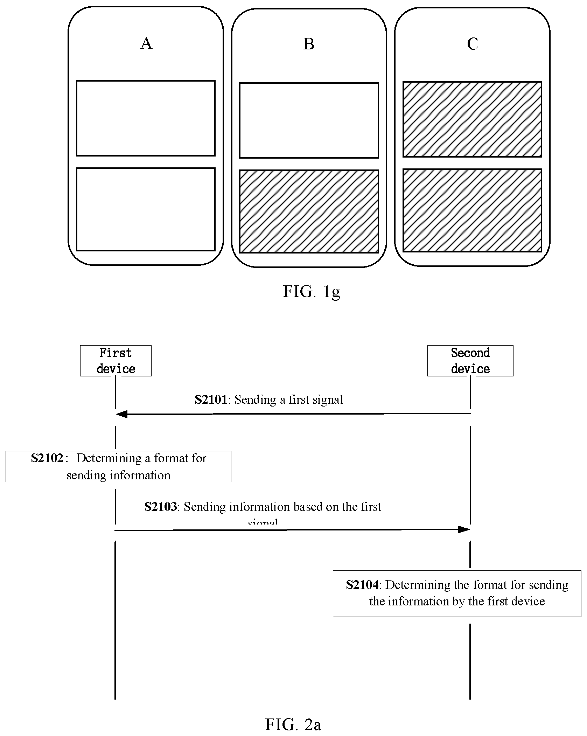

As shown in FIG. 1g, devices that perform wireless communication using a backscatter communication mechanism may be divided into three types:
Device A: which has no energy storage, cannot independently generate and/or amplify a signal, and can only perform backscatter communication.
Device B: which has energy storage, cannot generate a signal independently, and can only perform backscatter communication. The use of stored energy may include amplification of a backscatter signal.
Device C: which has energy storage and can generate a signal independently, that is, has an active radio frequency (RF) component for communication.

In some embodiments, the ambient IoT technology may be applied to a variety of communication scenarios, such as inventory management of a large-scale warehouse, a sensor network, etc. Correspondingly, the ambient IoT device needs to support operations such as information reading and writing, or executing other commands.

FIG. 2a is an interactive schematic diagram of an information indication method according to an embodiment of the present disclosure. As shown in FIG. 2a, an embodiment of the present disclosure relates to an information indication method, configured in a communication system 100, and the method includes step S2101 to step S2104.

As step S2101, a second device sends a first signal.

In some embodiments, the second device sends the first signal to a first device.

In some embodiments, the first device receives the first signal.

In some embodiments, the first device may be any passive device, an ambient energy device, or an ambient IoT device, etc.

Illustratively, the first device may be device A, device B and/or device C as shown in FIG. 1g.

The second device may be any endpoint that receives the first information. The endpoint may be a device corresponding to a receiving address of the first information, that is, the second device may be a receiving device of the first information.

The second device may include, but is not limited to, a server or an application function (AF).

Illustratively, the first device may be an IoT device, and the second device may be an IoT server.

In some embodiments, the second device may be any network device within a trust domain of a mobile communication network.

In some embodiments, the second device may be the any network device within the trust domain of the mobile communication network. Such second device may be connected to the mobile communication network through a network exposure function or the like.

In some embodiments, the first signal may include, but is not limited to, a radio frequency signal.

In some embodiments, the first signal may be a physical layer signal sent according to a preset sequence, and the physical layer signal may not carry any information content.

It is understandable that the first signal may be a simple excitation signal and may not carry any information.

In some other embodiments, the first signal may be a signal carrying the information content. After receiving the first signal, the first device may extract the information carried in the first signal by decoding the first signal.

In some embodiments, the first device has a backscatter communication capability.

In some embodiments, the first information may carry a task identifier. The task identifier identifies a task to be performed by the first device. For example, the task to be performed may include, but is not limited to, information reporting, data writing, data deleting, data updating, data caching, etc.

In some embodiments, the first signal may carry a device identifier of the first device that sends information. In this way, in a case where there are a plurality of first devices and the plurality of first devices receive the first signal, only the first device with the device identifier being carried in the first signal may send the information based on the excitation of the first signal.

At step S2102, the first device determines a format for sending information.

In some embodiments, the information to be sent is carried in a data frame, thus, the first device determines the format for sending the information, which may be understood as the first device determines the format of the data frame of the information to be sent. In other embodiments, the information to be sent may be carried in a protocol data packet (PDU), thus, the first device determines the format for sending the information, which may be understood as that the first device determines the format of the PDU of the information to be sent.

In some embodiments, the first device determines the format of the data frame for sending the information upon the excitation of the first signal.

It should be noted that the first device determines the format of the data frame for sending the information upon the excitation of the first signal, which may be understood as that: the first device determines the format of the data frame for sending the information based on energy of the first signal.

In some embodiments, the first device may determine the format of the data frame for sending the information based on preset information.

It should be noted that the first device may determine the format of the data frame for sending information by itself.

Illustratively, the first device may bound to a sensor, and the first device may determine the format of the data frame by reading the preset data of the sensor.

In some embodiments, determining the format of the data frame may include one of:
determining the format of the data frame according to a protocol agreement;
determining the format of the data frame according to a device type of the first device; or
determining the format of the data frame according to an application scenario of the first device.

It should be noted that the format of the data frame may be determined according to the protocol agreement, or the format of the data frame may be determined according to the device type or the application scenario of the first device.

It is understandable that different types of devices have different capabilities, and the content and/or length of the data frames that different types of devices can send may be different. For example, a first type of device has a weakest capability, and a data frame sent by the first type of device may carry any one of identification information, service information, or control information. For another example, a third type of device has a strongest capability, and a data frame sent by the third type of device may carry the identification information, the service information, and/or the control information.

In some embodiments, the application scenarios of the first device are different, and the contents carried in the data frames sent by the first device may be different.

Illustratively, in a case where the application scenario of the first device is a goods inventory scenario, the data frame sent by the first device may carry the identification information.

As another example, in a case where the application scenario of the first device is a sensor network scenario, the data frame sent by the first device may carry the service information and/or the identification information.

In some embodiments, data frames in different formats carry different information. It is noted that different types of first devices or first devices applied in different scenarios may determine the format of the data frame according to the content of the information that sends to the second device according to its own needs. Thus, the information may be communicated in a suitable format, and signaling overhead may be reduced and/or transmission reliability may be improved.

In some embodiments, the format includes at least one of:
a first format, in which a data frame in the first format carries service information;
a second format, in which a data frame in the second format carries control information;
a third format, in which a data frame in the third format carries identification information;
a fourth format, in which a data frame in the fourth format carries identification information and service information;
a fifth format, in which a data frame in the fifth format carries identification information and control information;
a sixth format, in which a data frame in the sixth format carries identification information, service information and control information; or
a seventh format, in which a data frame in the seventh format carries service information and control information.

It is noted that the data frames in the different formats may carry the different information or lengths of the data frames may also be different.

In some embodiments, the service information is related to a type of a service processed by the first device.

In some embodiments, the business information may include: sensor data measured by the first device.

Illustratively, the service information may be temperature data, humidity data, speed data, concentration data of a substance to be sampled, etc. It is noted that data lengths corresponding to different service information may be different.

In some embodiments, the control information is configured to indicate a response result of the first device to a control instruction sent by the second device.

In some embodiments, the first device determines a format of the control information. It is noted that the control information in different formats may carry different information.

In some embodiments, the format of the control information includes at least one of:
an eighth format, in which the control information in the eighth format carries ACK information or NACK information; or
a ninth format, in which the control information the ninth format carries ACK information, or NACK information and a failure cause.

It is noted that in a case where the first device receives the control instruction sent by the second device, the first device may determine specific information carried in the control information according to its own response result to the control instruction.

Illustratively, the control instruction is a data writing instruction. In a case where the first device successfully executes the data writing instruction, the first device determines the ACK information carried by the control information. In a case where the first device fails to successfully execute the data writing instruction, the first device determines the NACK information carried by the control information.

Furthermore, in a case where the first device fails to respond to the control instruction, the first device may carry a failure cause for a response failure in the control information, to enable the second device to perform subsequent control based on the failure cause.

As another example, in a case where the first device fails to successfully execute the data writing instruction due to insufficient storage space, the first device may carry the NACK information and the failure cause in the control information. After receiving the control information, the second device may abandon the data writing, or resend a data deleting instruction and a data writing instruction.

In some embodiments, the identification information includes:
a recognizable identifier; or
an identification sequence obtained by processing the recognizable identifier based on a preset algorithm.

In some embodiments, the recognizable identifier may be a unique identification code preset for the first device or an object associated with the first device. For example, the recognizable identifier may be a device identifier of the first device; or the recognizable identifier may be a goods identifier of goods associated with the first device.

In some embodiments, the first device determines that the data frame carries the recognizable identifier, or the data frame carries the identification sequence.

In some embodiments, the first device determines an identification type of the recognizable identifier.

In some embodiments, the identification type is used to indicate an encoding type of the recognizable identifier.

It is noted that, for the same recognizable identifier with different identification types, pieces of information indicated by the recognizable identifier may be different.

In some embodiments, the identification type of the recognizable identifier includes, but is not limited to,
an electronic Product Code (EPC);
   and/or,
an International Organization for Standardization/International Electro Technical Commission (ISO/IEC) code;
   and/or,
a User Identification (UID) code.

In some embodiments, the first device determines a data length of the recognizable identifier.

In some embodiments, pieces of identification information with different identification types have different data lengths; and/or pieces of identification information with the same identification type have different data lengths.

Illustratively, a data length of the recognizable identifier obtained based on the ISO/IEC code is 8 bits. A data length of the recognizable identifier obtained based on the UID code is 128 bits.

As another example, a data length of the recognizable identifier obtained based on EPC code may be 96 bits, or 256 bits, etc.

It is noted that the first device may directly send the recognizable identifier as the identification information to the second device, or, in order to improve reliability, the first device may process the recognizable identifier based on a preset algorithm and send a processed identification sequence as the identification information to the second device.

In some embodiments, the preset algorithm includes at least one of:
an encryption algorithm;
an error correction algorithm; or
an error detection algorithm.

In some embodiments, the encryption algorithm may include, but is not limited to, an MD5 algorithm, an AES algorithm or a DES algorithm.

It is noted that the first device encrypts the recognizable identifier using the encryption algorithm and carries an encrypted identification sequence in the data frame. After receiving the data frame, the second device may decrypt the identification sequence to obtain the recognizable identifier. In this way, even if the data frame sent by the first device is illegally obtained by other devices, the recognizable identifier included in the data frame cannot be known.

In some embodiments, the error correction algorithm may include, but is not limited to, a Reed Solomon algorithm and a BCH error correction algorithm.

It is noted that the first device processes the recognizable identifier using the error correction algorithm and carries a processed identification sequence in the data frame. After receiving the data frame, the second device may check the identification sequence to determine whether a received identification sequence has an error. In this way, even if there is an error in the information carried by the data frame, the second device may detect an error position and recover the data, which may reduce a probability of retransmission by the first device.

In some embodiments, the error detection algorithm may include, but is not limited to, a cyclic redundancy check (CRC) algorithm and a longitudinal redundancy check (LRC) algorithm.

It is noted that the first device processes the recognizable identifier using the error detection algorithm and carries a processed identification sequence in the data frame. After receiving the data frame, the second device may check the identification sequence to determine whether the received identification sequence has an error. In this way, the second device may request retransmission of the first device after determining that an error has occurred in the information carried by the data frame.

In some embodiments, the data frame includes: an indicator, indicating the format.

It is noted that, with carrying the indicator in the data frame and using the indicator to indicate the format of the data frame, after receiving the information, the second device may determine the format and the information content of the data frame used by the first device based on the indicator. In particular, for a case where the first device determines the format of the data frame by itself, it is convenient for the second device to quickly decode.

In some embodiments, the indicator includes at least one of:
a first indicator, indicating relevant information of the identification information in the data frame;
a second indicator, indicating relevant information of the service information in the data frame; or
a third indicator, indicating relevant information of the control information in the data frame.

It should be noted that the relevant information may include, but is not limited to, a data length, a format, and an identification type.

In some embodiments, the relevant information is used to assist the second device in decoding the identification information, the service information and/or the control information.

It should be noted that the data frames in the different formats carry different information, or the data frames in the different formats carry different indicators.

In some embodiments, the first indicator indicates at least one of:
whether the data frame carries identification information;
an identification type of identification information carried by the data frame; or
a data length of identification information carried by the data frame.

In some embodiments, the first indicator may include one or more indication bits. For example, different bit values of the indication bits indicate whether the data frame carries or does not carry the identification information. Alternatively, different bit values of the indication bits indicate identification types and/or data lengths of the identification information carried by the data frame.

In some embodiments, the identification type is used to indicate an encoding type of the identification information.

In some embodiments, the second indicator indicates at least one of:
whether the data frame carries service information; or
a data length of service information carried by the data frame.

In some embodiments, the second indicator may include one or more indication bits. For example, different bit values of the indication bits indicate whether the data frame carries or does not carry the service information. Alternatively, different bit values of the indication bits indicate the data lengths of the service information carried by the data frame.

In some embodiments, the third indicator indicates at least one of:
whether the data frame carries control information; or
a format of control information carried by the data frame.

In some embodiments, the third indicator may include one or more indication bits. For example, different bit values of the indication bits indicate whether the data frame carries or does not carry the control information. Alternatively, the different bit values of the indication bits indicate the formats of the control information carried by the data frame.

In some embodiments, encoding of the indicator carried by the data frame is independent of encoding of information carried by the data frame.

It is noted that the indicator and the content carried in the data frame are encoded independently of each other, such that the decoding of the indicator may also be independent of the decoding of the content included in the data frame. Therefore, after receiving the data frame sent by the first device, the second device may first decode the indicator in the data frame to determine the format of the data frame, and then decode the content carried by the data frame to ensure the correctness of the decoding.

At step S2103, the first device sends information based on the first signal.

In some embodiments, the first device sends the information based on a trigger or excitation of the first signal.

In other embodiments, the first device sends the information based on signal energy of the first signal.

In some embodiments, the first device sends the information to the second device based on the first signal.

In some embodiments, the second device receives the information sent by the first device upon excitation of the first signal.

At step S2104, the second device determines a format for sending the information by the first device.

In some embodiments, the information sent by the first device is carried by the data frame. Thus, the second device determines the format for sending the information by the first device, which may be understood as that the second device determines the format for the data frame of the information sent by the first device.

In some embodiments, the second device determines the format for sending the information by the first device based on the indicator in the data frame of the information.

In some embodiments, the decoding of the indicator in the data frame is independent of the decoding of the content carried by the data frame.

It is noted that the second device may first decode the information received from the first device to obtain the indicator, and determine, based on the indicator, the format of the data frame, and then decode the content carried by the data frame according to the format of the data frame, which may improve decoding efficiency and ensure the correctness of decoding.

In some embodiments, names of information and the like are not limited to the names recorded in embodiments. The terms such as "information", "message", "signal", "signaling", "report", "configuration", "indication", "instruction", "command", "channel", "parameter", "field", and "data" may be used interchangeably.

In some embodiments, the terms such as "send", "emit", "report", "transmit", and the like may be used interchangeably.

The information indication method involved in the embodiments of the present disclosure may include at least one of step S2101 to step S2104. For example, step S2101 to step S2103 may be implemented as an independent embodiment, but is not limited thereto.

In some embodiments, step S2104 is optional, and one or more of these steps may be omitted or replaced in different embodiments.

It is noted that, in a case where the format of the data frame of the information sent by the first device may be specified by the second device, if the data frame carries the control information, the first device does not need to carry the indicator in the data frame, and thus does not need to determine the indicator. Alternatively, the second device directly forwards the data frame to other devices without decoding the data frame.

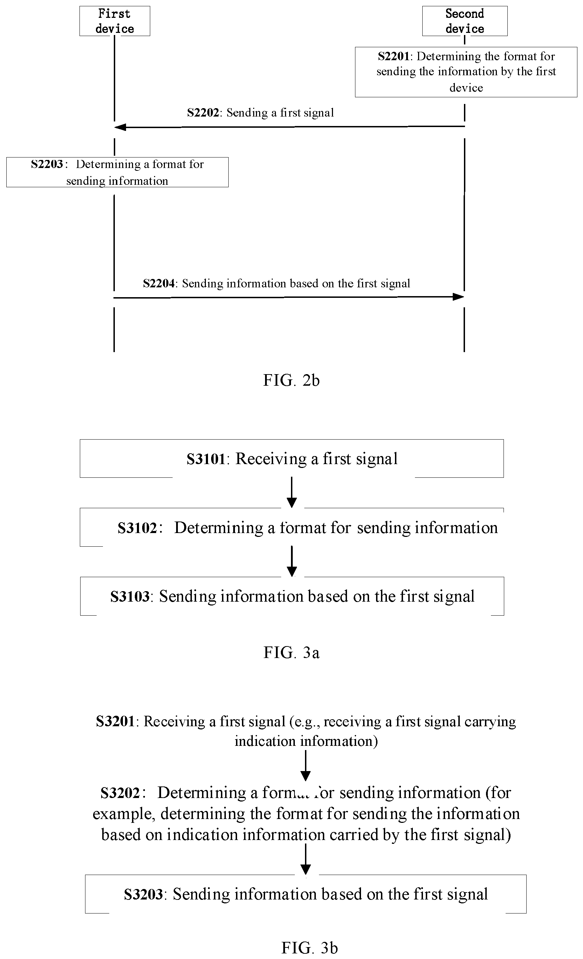

FIG. 2b is an interactive schematic diagram of an information indication method according to an embodiment of the present disclosure. As shown in FIG. 2b, an embodiment of the present disclosure relates to an information indication method, configured in a communication system 100, and the method includes step S2201 to step S2204.

At step S2201, a second device determines a format for sending information by a first device.

In some embodiments, the information to be sent is carried in a data frame. Thus, the second device determines the format for sending the information by the first device, which may be understood as the second device determining the format of the data frame of the information sent by the first device.

In another embodiments, the information to be sent may be carried in a PDU. Thus, the second device determining the format of the information transmitted by the first device may be understood as that the second device determines the format of the PDU of the information sent by the first device. In some embodiments, determining the format of the data frame may include one: determining the format of the data frame according to a protocol agreement; or, determining the format of the data frame according to a device type of the first device; or, determining the format of the data frame according to an application scenario of the first device.

It is understandable that different types of first devices have different capabilities, and the content and/or length of the data frames that different types of devices can send may be different. For example, a first type of first device has a weakest capability, and a data frame sent by the first type of device may carry any one of identification information, service information, or control information. For another example, a third type of device has a strongest capability, and a data frame sent by the third type of device may carry the identification information, the service information, and/or the control information.

In some embodiments, the application scenarios of the first device are different, and the contents carried in the data frames sent by the first device may be different.

Illustratively, in a case where the application scenario of the first device is a goods inventory scenario, the data frame sent by the first device may carry the identification information.

As another example, in a case where the application scenario of the first device is a sensor network scenario, the data frame sent by the first device may carry the service information and/or the identification information.

In some embodiments, data frames in different formats carry different information. It is noted that in a case where the second device determines the format for sending the information to the first device, the second device may take into account different types of first devices or first devices applied in different scenarios.

Based on this, the second device may determine the format of the data frame according to the protocol agreement, the device type or the application scenario of the first device.

In some embodiments, the format includes at least one of:
a first format, in which a data frame in the first format carries service information;
a second format, in which a data frame in the second format carries control information;
a third format, in which a data frame in the third format carries identification information;
a fourth format, in which a data frame in the fourth format carries identification information and service information;
a fifth format, in which a data frame in the fifth format carries identification information and control information;
a sixth format, in which a data frame in the sixth format carries identification information, service information and control information; or
a seventh format, in which a data frame in the seventh format carries service information and control information.

It is noted that the data frames in the different formats may carry the different information or lengths of the data frames may also be different.

In some embodiments, the service information is related to a type of a service processed by the first device.

In some embodiments, the business information may include: sensor data measured by the first device.

Illustratively, the service information may be temperature data, humidity data, speed data, concentration data of a substance to be sampled, etc. It is noted that data lengths corresponding to different service information may be different.

In some embodiments, the control information is configured to indicate a response result of the first device to a control instruction sent by the second device.

In some embodiments, the second device determines a format of the control information. It is noted that the control information in different formats may carry different information.

In some embodiments, the format of the control information includes at least one of:
an eighth format, in which the control information in the eighth format carries ACK information or NACK information; or
a ninth format, in which the control information the ninth format carries ACK information, or NACK information and a failure cause.

It is noted that the second device may specify the format of the control information sent by the first device, that is, the second device may specify the specific information carried by the control information sent by the first device.

In some embodiments, the identification information includes:
a recognizable identifier; or
an identification sequence obtained by processing the recognizable identifier based on a preset algorithm.

In some embodiments, the second device may determine that the data frame of the information sent by the first device carries the recognizable identifier, or the data frame carries the identification sequence.

It is noted that the second device may specify that the first device directly carries the recognizable identifier as the identification information in the data frame. Or, in order to improve reliability, the second device may specify that the first device may process the recognizable identifier based on the preset algorithm and carry the processed identification sequence as the identification information in the data frame.

In some embodiments, the second device may determine an identification type of the recognizable identifier.

In some embodiments, the identification type is used to indicate an encoding type of the recognizable identifier.

It is noted that, for the same recognizable identifier with different identification types, pieces of information indicated by the recognizable identifier may be different.

It should be noted that the second device may specify the format for sending the information by the first device.

In some embodiments, the identification type of the recognizable identifier includes, but is not limited to,
an EPC;
   and/or,
an ISO/IEC coding;
   and/or,
a UID coding.

In some embodiments, the second device may determine a data length of the recognizable identifier.

In some embodiments, pieces of identification information with different identification types have different data lengths; and/or pieces of identification information with the same identification type have different data lengths.

Illustratively, a data length of the recognizable identifier obtained based on the ISO/IEC coding is 8 bits. A data length of the recognizable identifier obtained based on the UID coding is 128 bits.

As another example, a data length of the recognizable identifier obtained based on EPC coding may be 96 bits, or 256 bits, etc.

In some embodiments, the preset algorithm includes at least one of:
an encryption algorithm;
an error correction algorithm; or
an error detection algorithm.

In some embodiments, the encryption algorithm may include, but is not limited to, an MD5 algorithm, an AES algorithm or a DES algorithm.

It is noted that the second device may specify the first device to encrypt the recognizable identifier using the encryption algorithm and to carry an encrypted identification sequence in the data frame. After receiving the data frame, the second device may decrypt the identification sequence based on the specified encryption algorithm to obtain the recognizable identifier. In this way, even if the data frame sent by the first device is illegally obtained by other devices, the recognizable identifier included in the data frame cannot be known.

In some embodiments, the error correction algorithm may include, but is not limited to, a Reed Solomon algorithm and a BCH error correction algorithm.

It is noted that the second device may specify the first device to process the recognizable identifier using the error correction algorithm and to carry a processed identification sequence in the data frame. After receiving the data frame, the second device may check the identification sequence based on the specified error correction algorithm to determine whether a received identification sequence has an error. In this way, even if there is an error in the information carried by the data frame, the second device may detect an error position and recover the data, which may reduce a probability of retransmission by the first device.

In some embodiments, the error detection algorithm may include, but is not limited to, a CRC algorithm and a LRC algorithm.

It is noted that the second device may specify the first device to process the recognizable identifier using the error detection algorithm and to carry a processed identification sequence in the data frame. After receiving the data frame, the second device may check the identification sequence based on the specified error detection algorithm to determine whether the received identification sequence has an error. In this way, the second device may request retransmission of the first device after determining that an error has occurred in the information carried by the data frame.

At step S2202, the second device sends a first signal.

For optional implementations of step S2202, reference may be made to the optional implementations of step S2101 in FIG. 2a, and other related parts in embodiments related to FIG. 2a, which are not repeated herein.

In some embodiments, the first signal may not carry indication information. It is noted that the first signal is simply used as an excitation signal for the first device.

In some embodiments, the second device sends the indication information to the first device alone.

In some embodiments, the first signal may carry the indication information.

In some embodiments, the indication information indicates a format of a data frame as specified by the second device.

In some embodiments, the indication information includes one or more indication bits. For example, different bit values of the indication bits indicate different formats of the data frame.

In some embodiments, the indication information includes at least one of:
a first indication, indicating the content carried by the data frame;
a second indication, indicating the format of the control information carried by the data frame; or
a third indication indicates the identification type of the identification information carried by the data frame.

At step S2203, the first device determines the format for sending the information.

In some embodiments, the information to be sent is carried in a data frame, thus, the first device determines the format for sending the information, which may be understood as the first device determines the format of the data frame of the information to be sent.

In other embodiments, the information to be sent may be carried in a PDU, thus, the first device determines the format for sending the information, which may be understood as that the first device determines the format of the PDU of the information to be sent.

In some embodiments, the first device determines the format of the data frame for sending the information upon the excitation of the first signal.

It should be noted that the first device determines the format of the data frame for sending the information upon the excitation of the first signal, which may be understood as that: the first device determines the format of the data frame for sending the information based on energy of the first signal.

In some embodiments, the first signal carries indication information, and the second device may determine the format of the data frame for sending the information based on the indication information sent by the second device.

It should be noted that the first device may determine the format of the data frame as specified by the second device based on the indication information of the second device.

At step S2204, the first device sends information based on the first signal.

In some embodiments, the first device sends the information based on a trigger or excitation of the first signal.

In other embodiments, the first device sends the information based on signal energy of the first signal.

In some embodiments, the first device sends the information to the second device based on the first signal.

In some embodiments, the second device receives the information sent by the first device upon excitation of the first signal.

FIG. 3a is a flowchart illustrating an information indication method according to an embodiment of the present disclosure. As shown in FIG. 3a, an embodiment of the present disclosure relates to an information indication method, which is performed by a first device 103, and the method includes step S3101 to step S3103.

At step S3101, a first signal is received.

In some embodiments, the first device receives a first signal sent by a second device.

In some embodiments, for optional implementations of the first signal, reference may be made to the optional implementations of step S2101 in FIG. 2a, and other related parts in embodiments related to FIG. 2a, which are not repeated herein.

At step S3102, a format for sending information is determined.

In some embodiments, for optional implementations of step S3102, reference may be made to the optional implementations of step S2102 in FIG. 2a, and other related parts in embodiments related to FIG. 2a, which are not repeated herein.

At step S3103, the information is sent based on the first signal.

In some embodiments, for optional implementations of step S3103, reference may be made to the optional implementations of step S2103 in FIG. 2a, and other related parts in embodiments related to FIG. 2a, which are not repeated herein.

FIG. 3b is a flowchart illustrating an information indication method according to an embodiment of the present disclosure. As shown in FIG. 3b, an embodiment of the present disclosure relates to an information indication method, which is performed by a first device 103, and the method includes step S3201 to step S3203.

At step S3201, a first signal is received (e.g., a first signal carrying indication information is received).

In some embodiments, the first device receives the first signal sent by a second device.

In some embodiments, for optional implementations of the first signal, reference may be made to the optional implementations of step S2202 in FIG. 2b, and other related parts in embodiments related to FIG. 2b, which are not repeated herein.

At step S3202, a format for sending the information is determined (for example, the format for sending the information is determined according to indication information carried by the first signal).

In some embodiments, for optional implementations of step S3202, reference may be made to the optional implementations of step S2203 in FIG. 2b, and other related parts in embodiments related to FIG. 2b, which are not repeated herein.

At step S3203, information is sent based on the first signal.

In some embodiments, for optional implementations of step S3203, reference may be made to the optional implementations of step S2204 in FIG. 2b, and other related parts in embodiments related to FIG. 2b, which are not repeated herein.

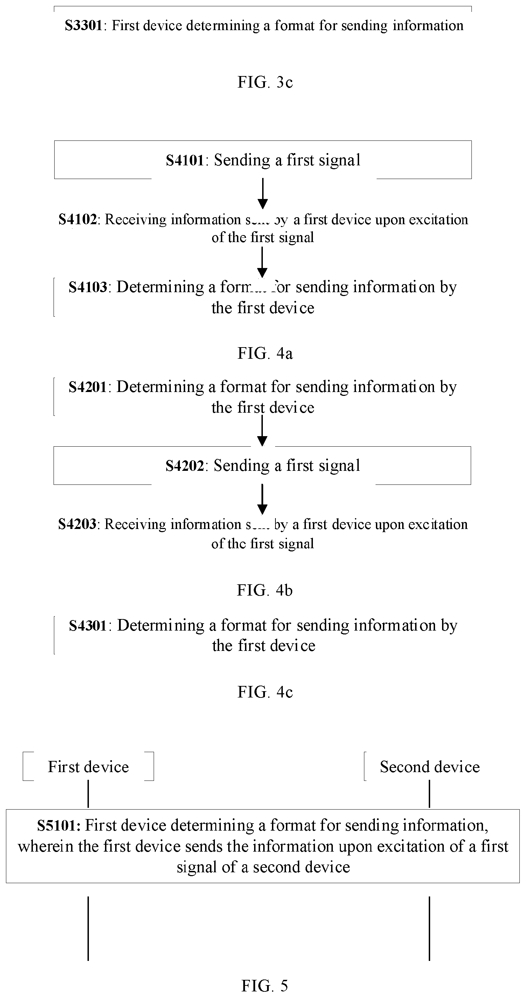

FIG. 3c is a flowchart illustrating an information indication method according to an embodiment of the present disclosure. As shown in FIG. 3c, an embodiment of the present disclosure relates to an information indication method, which is performed by a first device, and the method includes step S3301.

At step S3301, a first device determines a format for sending information.

In some embodiments, the first device sends the information upon excitation of a first signal of a second device.

In some embodiments, data frames in different formats carry different information.

In some embodiments, the format includes at least one of:
a first format, in which a data frame in the first format carries service information;
a second format, in which a data frame in the second format carries control information;
a third format, in which a data frame in the third format carries identification information;
a fourth format, in which a data frame in the fourth format carries identification information and service information;
a fifth format, in which a data frame in the fifth format carries identification information and control information;
a sixth format, in which a data frame in the sixth format carries identification information, service information and control information; or
a seventh format, in which a data frame in the seventh format carries service information and control information.

In some embodiments, the data frame includes: an indicator, indicating the format.

In some embodiments, the indicator further indicates a length of the data frame.

In some embodiments, the indicator includes at least one of:
a first indicator, indicating relevant information of the identification information in the data frame;
a second indicator, indicating relevant information of the service information in the data frame; or
a third indicator, indicating relevant information of the control information in the data frame.

In some embodiments, the first indicator indicates at least one of:
whether the data frame carries identification information;
an identification type of identification information carried by the data frame; or
a data length of identification information carried by the data frame.

In some embodiments, pieces of identification information with different identification types have different data lengths;
and/or,
pieces of identification information with the same identification type have different data lengths.

In some embodiments, the identification information includes:
a recognizable identifier;
   or,
an identification sequence obtained by processing the recognizable identifier based on a preset algorithm.

In some embodiments, the preset algorithm includes at least one of:
an encryption algorithm;
an error correction algorithm; or
an error detection algorithm.

In some embodiments, the second indicator indicates at least one of:
whether the data frame carries service information; or
a data length of service information carried by the data frame.

In some embodiments, the third indicator indicates at least one of:
whether the data frame carries control information; or
a format of control information carried by the data frame.

In some embodiments, the format of the control information includes at least one of:
an eighth format, in which the control information in the eighth format carries ACK information or NACK information; or
a ninth format, in which the control information the ninth format carries ACK information, or NACK information and a failure cause.

In some embodiments, determining, by the first device, the format for sending the information comprises:
determining the format of the data frame as determined by the first device itself; or
determining the format of the data frame as specified by the second device.

In some embodiments, the format of the data frame is determined by the first device itself, and the data frame sent by the first device at least includes an indicator.

In some embodiments, encoding of the indicator carried by the data frame is independent of encoding of information carried by the data frame.

In some embodiments, the method further includes: receiving indication information sent by the second device, in which the indication information indicates the format of the data frame specified by the second device.

In some embodiments, the method includes: determining the format of the data frame according to a protocol agreement; or, determining the format of the data frame according to a device type of the first device; or, determining the format of the data frame according to an application scenario of the first device.

In some embodiments, the first device includes:
a first type of device without having capabilities of energy storage and signal generation.
a second type of device having a capability of energy storage without having a capability of signal generation;
a third type of device having capabilities of energy storage and signal generation.

FIG. 4a is a flowchart illustrating an information indication method according to an embodiment of the present disclosure. As shown in FIG. 4a, an embodiment of the present disclosure relates to an information indication method, which is performed by a second device, and the method includes step S4101 to step S4103.

At step S4101, a first signal is sent.

In some embodiments, for optional implementations of step S4101, reference may be made to the optional implementations of step S2101 in FIG. 2a, and other related parts in embodiments related to FIG. 2a, which are not repeated herein.

In some embodiments, the second device sends the first signal to a first device.

In some embodiments, the first signal does not carry indication information.

At step S4102, information sent by the first device upon excitation of a first signal is received.

In some embodiments, the second device receives the information sent by the first device based on a trigger or excitation of the first signal.

In some embodiments, the second device receives the information sent by the first device based on signal energy of the first signal.

In some embodiments, for optional implementations of step S4102, reference may be made to the optional implementations of step S2103 in FIG. 2a, and other related parts in embodiments related to FIG. 2a, which are not repeated herein.

At step S4103, a format for sending the information by the first device is determined.

In some embodiments, the information sent by the first device is carried by a data frame, thus, the second device determines the format of the data frame.

In some embodiments, the format for sending the information by the first device is determined based on an indicator within the data frame of the information.

In some embodiments, for optional implementations of step S4103, reference may be made to the optional implementations of step S2104 in FIG. 2a, and other related parts in embodiments related to FIG. 2a, which are not repeated herein.

The information indication method involved in the embodiment of the present disclosure may include at least one of step S4101 to step S4103. For example, step S4101 combined with step S4102 may be implemented as an independent embodiment, but is not limited thereto.

In some embodiments, step S4103 is optional, and one or more of these steps may be omitted or replaced in different embodiments. It is noted that in a case where the format of the data frame of the information sent by the first device may be specified by the second device, the second device does not need to determine the format of the data frame.

FIG. 4b is a flowchart illustrating an information indication method according to an embodiment of the present disclosure. As shown in FIG. 4b, an embodiment of the present disclosure relates to an information indication method, which is performed by a second device, and the method includes step S4201 to step S4203.

At step S4201, a format for sending information by a first device is determined.

In some embodiments, for optional implementations of step S4201, reference may be made to the optional implementations of step S2201 in FIG. 2b, and other related parts in embodiments related to FIG. 2b, which are not repeated herein.

It is noted that the second device may specify the format of the data frame in which the first device sends the information.

At step S4202, a first signal is sent.

In some embodiments, the first information includes indication information, and the indication information indicates a format of a data frame of information sent by the first device that is specified by the second device.

In some embodiments, for optional implementations of step S4202, reference may be made to the optional implementations of step S2202 in FIG. 2b, and other related parts in embodiments related to FIG. 2b, which are not repeated herein.

At step S4203, information sent by the first device upon excitation of the first signal is received.

In some embodiments, for optional implementations of step S4203, reference may be made to the optional implementations of step S2204 in FIG. 2b, and other related parts in embodiments related to FIG. 2b, which are not repeated herein.

It is noted that, in a case where the second device specifies the format of the data frame for sending information by the first device, the data frame for sending the information by the first device may not carry an indicator.

In other embodiments, the data frame for sending the information by the first device may carry the indicator.

It should be noted that, in a case where the second device specifies the format of the data frame for sending information by the first device, the data frame for sending the information by the first device may carry the indicator, such that the second device may determine, based on the indicator, whether the format of the data frame of the information actually sent by the first device is different from the format of the data frame as specified by the second device For example, in a case where the format of the data frame of information sent by the first device as specified by the second device is inappropriate, the first device may adjust by itself the format of the data frame for sending the information.

FIG. 4c is a flowchart illustrating an information indication method according to an embodiment of the present disclosure. As shown in FIG. 4c, an embodiment of the present disclosure relates to an information indication method, which is performed by a second device, and the method includes step S4301.

At step S4301, a format for sending information by a first device is determined.

In some embodiments, the first device sends the information upon excitation of a first signal of a second device.

In some embodiments, data frames in different formats carry different information.

In some embodiments, the format includes at least one of:
a first format, in which a data frame in the first format carries service information;
a second format, in which a data frame in the second format carries control information;
a third format, in which a data frame in the third format carries identification information;
a fourth format, in which a data frame in the fourth format carries identification information and service information;
a fifth format, in which a data frame in the fifth format carries identification information and control information;
a sixth format, in which a data frame in the sixth format carries identification information, service information and control information; or
a seventh format, in which a data frame in the seventh format carries service information and control information.

In some embodiments, the data frame includes: an indicator, indicating the format.

In some embodiments, the indicator further indicates a length of the data frame.

In some embodiments, the indicator includes at least one of:
a first indicator, indicating relevant information of the identification information in the data frame;
a second indicator, indicating relevant information of the service information in the data frame; or
a third indicator, indicating relevant information of the control information in the data frame.

In some embodiments, the first indicator indicates at least one of:
whether the data frame carries identification information;
an identification type of identification information carried by the data frame; or
a data length of identification information carried by the data frame.

In some embodiments, pieces of identification information with different identification types have different data lengths;
and/or,
pieces of identification information with the same identification type have different data lengths.

In some embodiments, the identification information includes:
a recognizable identifier;
   or,
an identification sequence obtained by processing the recognizable identifier based on a preset algorithm.

In some embodiments, the preset algorithm includes at least one of:
an encryption algorithm;
an error correction algorithm; or
an error detection algorithm.

In some embodiments, the second indicator indicates at least one of:
whether the data frame carries service information; or
a data length of service information carried by the data frame.

In some embodiments, the third indicator indicates at least one of:
whether the data frame carries control information; or
a format of control information carried by the data frame.

In some embodiments, the format of the control information includes at least one of:
an eighth format, in which the control information in the eighth format carries ACK information or NACK information; or
a ninth format, in which the control information the ninth format carries ACK information, or NACK information and a failure cause.

In some embodiments, determining, by the first device, the format for sending the information comprises:
determining the format of the data frame as determined by the first device itself; or
determining the format of the data frame as specified by the second device.

In some embodiments, determining the format for sending information by the first device includes: determining the format of the data frame based on an indicator in the data frame, in which the format of the data frame is determined by the first device itself.

In some embodiments, encoding of the indicator carried by the data frame is independent of encoding of information carried by the data frame.

In some embodiments, the method further includes: sending indication information to the first device, in which the indication information indicates the format of the data frame specified by the second device.

In some embodiments, determining the format for sending information by the first device includes: determining the format of the data frame according to a protocol agreement; or, determining the format of the data frame according to a device type of the first device; or, determining the format of the data frame according to an application scenario of the first device.

In some embodiments, the second device includes at least one of:
a network device;
a terminal; or
a secondary network node.

FIG. 5 is an interactive schematic diagram illustrating an information indication method according to an embodiment of the present disclosure. As shown in FIG. 5, an embodiment of the present disclosure relates to an information indication method, which is configured in a communication system 100, and the method includes step S5101.

At step S5101, a first device determines a format for sending information. The first device sends the information upon excitation of a first signal of a second device

In some embodiments, the above method may include the methods of the above communication system side, the above first device side, the above second device side, etc., which may not be repeated here.

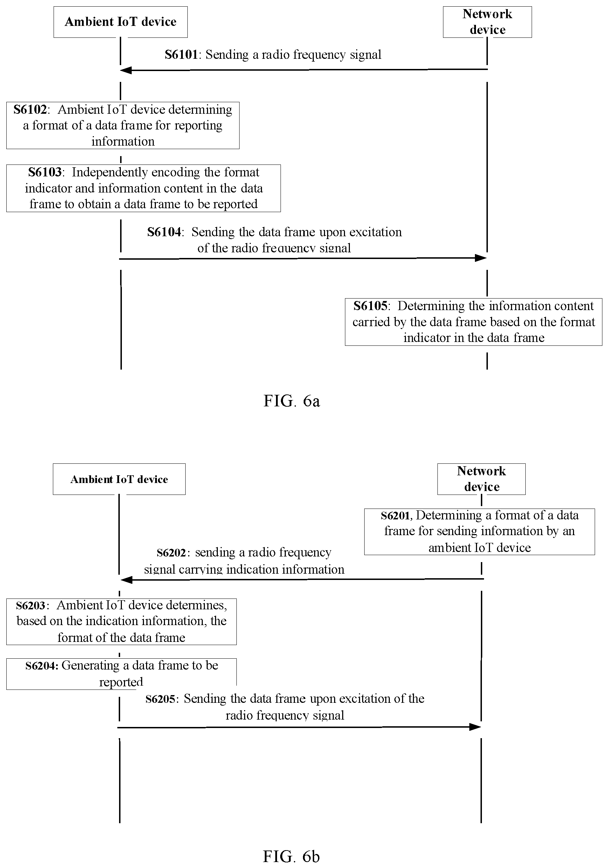

FIG. 6a is an interactive schematic diagram illustrating an information indication method according to an embodiment of the present disclosure. As shown in FIG. 6a, an embodiment of the present disclosure relates to an information indication method, and the method includes step S6101 to step S6105.

At step S6101, a network device sends a radio frequency signal to an ambient IoT device.

In some embodiments, the radio frequency signal corresponds to a first signal in the present disclosure.

At step S6102, the ambient IoT device determines a format of a data frame for reporting information.

In some embodiments, the ambient IoT device corresponds to the first device in the present disclosure.

In some embodiments, data frames in different formats carry different information.

In some embodiments, the information carried by the data frames in different formats may be one of:
a terminal index number;
service information;
control information;
a terminal index number and service information;
a terminal index number and control information;
a terminal index number, service information and control information; or
service information and control information.

In some embodiments, the service information may be application data information of the ambient IoT device. For example, in a sensor network scenario, the service information of the ambient IoT device may be historical measurement data stored by the sensor, such as temperature, humidity, speed, concentration of the substance to be sampled, etc.

In some embodiments, the control information may be execution response information of the ambient IoT device to the control command issued by the network device.

In some embodiments, the terminal index number corresponds to the identification information in the present disclosure.

In some embodiments, the service information corresponds to the service information in the present disclosure.

In some embodiments, the data frame further includes: one or more format indicators, used to indicate information included in the data frame.

In some embodiments, the format indicators correspond to the indicator in the present disclosure.

In some embodiments, the format indicator includes at least one of:
a first format indicator, used to indicate relevant information of the terminal index number;
a second format indicator, used to indicate relevant information of the service information; or
a third format indicator is used to indicate relevant information of the control information.

In some embodiments, the first format indicator indicates one of:
whether the data frame includes the terminal index number;
an index type of the terminal index number included in the data frame; or
an index length of the terminal index number included in the data frame.

For example, the index type of the terminal index number may be an EPC code, an ISO/IEC code or a UID code.

It is noted that index lengths (bits) of different types of terminal index numbers may be different. For a specific type of terminal index number, there may also be a different index length. For example, an index length of an EPC-coded terminal index number may be 96 or 256 bits.

In some embodiments, the first format indicator corresponds to the first indicator of the present disclosure.

In some embodiments, the second format indicator indicates one of:
whether the data frame includes the service information; or
a length of the service information included in the data frame.

In some embodiments, the second format indicator corresponds to the second indicator in the present disclosure.

In some embodiments, the third format indicator indicates one of:
whether the data frame includes the control information; or
an information format of the control information included in the data frame.

In some embodiments, the information format of the control information may be one of:
(1) ACK or NACK; or
(2) ACK, or NACK and a failure cause.

It is noted that the ambient IoT device may determine the data frame for reporting the information by itself and indicate the format of the selected data frame in the format indicator.

At step S6103, the ambient IoT device independently encodes the format indicator and information content in the data frame to obtain a data frame to be reported.

In some embodiments, the format indicator may precede the information content included in the data frame.

It is noted that the format indicator is not jointly encoded with the information content, such that the decoding of the format indicator may be independent of the decoding of the information content.

At step S6104, the ambient IoT device sends the data frame upon excitation of the radio frequency signal.

In some embodiments, the network device sends the radio frequency signal to the ambient IoT device to excite the ambient IoT device and provide power to the ambient IoT device.

In some embodiments, the ambient IoT device reflects the radio frequency signal and modulates the data frame into a reflected signal of the radio frequency signal.

At step S6105, the network device determines the information content carried by the data frame based on the format indicator in the data frame.

In some embodiments, the decoding of the format indicator may be independently of the decoding of the information content included in the data frame.

The information indication method involved in the embodiment of the present disclosure may include at least one of step S6101 to step S6105. For example, step S6101 to step S6104 may be implemented as independent embodiments, but is not limited thereto.

In some embodiments, step S6105 is optional, and one or more of these steps may be omitted or replaced in different embodiments. It is noted that, in a case where the network device specifies the format of the data frame for sending the information by the ambient IoT device, the network device does not need to determine the format of the data frame based on the format indicator, and the data frame may not carry the format indicator.

FIG. 6b is an interactive schematic diagram illustrating an information indication method according to an embodiment of the present disclosure. As shown in FIG. 6b, an embodiment of the present disclosure relates to an information indication method, and the method includes step S6201 to step S6205.

At step S6201, a network device determines a format of a data frame for sending information by an ambient IoT device.

At step S6202, the network device sends a radio frequency signal carrying indication information to the ambient IoT device.

In some embodiments, the indication information indicates a format of a data frame as specified by the network device.

In some embodiments, the ambient IoT device receives the indication information sent by the network device, and determines the format of the data frame for reporting the information based on the indication information.

It is noted that which information contents included in the data frame for reporting the information by the ambient IoT device may be specified by the network device.

At step S6203, the ambient IoT device determines, based on the indication information, the format of the data frame.

It may be noted that the ambient IoT device determines the information content of the data frame as specified by the network device based on the indication information, and determines whether the data frame needs to carry a format indicator based on the information content of the specified data frame.

In some embodiments, the data frame may not need to carry the format indicator. For example, in a case where the network device specifies that the data frame includes control information, the ambient IoT device does not need to carry the third format indicator in the data frame.

In some embodiments, the data frame may carry a first format indicator and/or a second format indicator. For example, in a case where the network device specifies that the data frame includes a terminal index number and/or service information, the ambient IoT device needs to carry the first format indicator in the data frame to indicate an index type and an index length of the terminal index number. For another example, in a case where the network device specifies that the data frame includes the service information, the ambient IoT device needs to carry a second format indicator in the data frame to indicate an information length of the service information.

At step S6204, the ambient IoT device generates a data frame to be reported.

At step S6205, ambient IoT device sends the data frame upon excitation of the radio frequency signal.

The information indication method involved in the embodiment of the present disclosure may include at least one of step S6201 to step S6205. For example, step S6202 to step S6205 may be implemented as an independent embodiment, but is not limited thereto.

In some embodiments, step S6201 is optional, and one or more of these steps may be omitted or replaced in different embodiments. It is noted that the ambient IoT device may determine the format of the data frame for sending the information by itself, without the need for the network device to determine the format of the data frame.

In embodiments of the present disclosure, part or all of the steps and their optional implementations may be arbitrarily combined with part or all of the steps in other embodiments, or may be arbitrarily combined with optional implementations of other embodiments.

Embodiment 1: an ambient IoT device determines a data frame for reporting information; the information content carried by the data frame includes one of:
(1) a terminal index number;
(2) a terminal index number and service information;
(3) a terminal index number and control information;
(4) service information;
(5) control information;
(6) a terminal index number, service information and control information;
(7) service information and control information.

It should be noted that the service information is application data information of the ambient IoT device. For example, the service information is historical measurement data of a sensor bound to the ambient IoT device, such as temperature, humidity, speed, concentration of the substance to be sampled, etc.

The control information is execution response information of the ambient IoT device to a command on the network side.

Embodiment 2: on the basis of Embodiment 1, the data frame further includes: a format indicator, indicating information included in the data frame.

The format indicators may include the following indicators.

### (1) First format indicator

The first format indicator is used to indicate at least one of:
whether a terminal index number is present;
a terminal index type; or
a terminal index length.

It should be noted that the terminal index type may include, but is not limited to, an EPC code, an ISO/IEC code or a UID code. Different types of terminal index numbers may have different index lengths. For a specific type of terminal index number, for example, an EPC-coded terminal index number, there may also be a different index length. For example, an index length of the EPC-coded terminal index number has a different bit length such as 96 or 256 bits.

### (2) Second format indicator;

The second format indicator is used to indicate at least one of:
whether service information is present; or
a bit amount of service information.

It should be noted that the bit amount of the service information refers to the number of bits of the service information.

### (3) Third format indicator

The third format indicator is used to indicate at least one of:
whether control information is present;
a format of the control information.

It should be noted that the formats of the control information may include: Format 1: carrying only ACK information or only NACK information; or Format 2: carrying ACK information or NACK information and a failure cause.

Embodiment 3: on the basis of Embodiment 2, the ambient IoT device determines the data frame for reporting the information by itself and indicates the format of the selected data frame in the format indicator.

Embodiment 4: on the basis of Embodiment 3, the format indicator is located before the information content included in the data frame, and the format indicator is not jointly encoded with the information content, that is, the decoding of the format indicator may be independent of the decoding of the information content included in the data frame.

Embodiment 5: on the basis of Embodiment 1, the ambient IoT device may determine the format of the data frame for reporting the information according to an indication from the network side.

It should be noted that, in this case, which information content included in the data frame may be specified by the network side.

In a case where the network side specifies the format of the data frame, the data frame may not carry a format indicator, or the data frame may carry a part of format indicators.

Here, whether the data frame carries the format indicator, and which format indicators are carried, depends on the information content included in the data frame as specified by the network side.

For example, in a case where the network side specifies that the data frame includes the terminal index number, the ambient IoT device needs to carry a first format indicator in the data frame to indicate the terminal index type and the index length.

For another example, in a case where the network side indicates that the data frame includes service information, the ambient IoT device needs to carry a second format indicator in the data frame to indicate a bit amount of the service information.

Embodiments of the disclosure also provide an apparatus for implementing any one of the above methods. For example, an apparatus is provided, the apparatus includes units or modules for performing the steps executed by the terminal in any one of the above methods. In this case, the apparatus may be configured in the terminal. Furthermore, another apparatus is provided, the apparatus includes units or modules for performing the steps executed by the network device in any one of the above methods. In this case, the apparatus may be configured in the network device.

It should be understood that a division of units in the above apparatus is only a division of logical functions. In actual implementations, they may be fully or partially integrated into one physical entity, or may be physically separated. In addition, the units or the modules in the apparatus may be implemented in a form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in a form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in a form of software called by the processor, or fully implemented in a form of the hardware circuit, or partially implemented in a form of software called by the processor and partially implemented in a form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

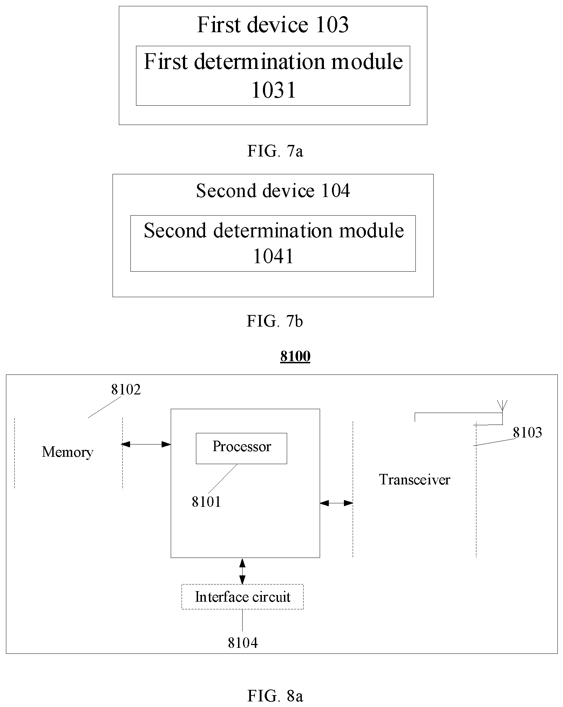

FIG. 7a is a schematic diagram illustrating a structure of a first device according to an embodiment of the disclosure. As illustrated in FIG. 7a, the first device 103 includes a first determination module 1031. The first determination module 1031 is configured to determine a format for sending information, in which the first device sends the information upon excitation of a first signal of a second device. In some embodiments, the first determination module 1031 may be used to perform steps related to information determination performed by the first device in any of the above information indication methods, which is not be repeated herein. In some embodiments, the first device 103 further includes a first transceiver module, and the above first transceiver module is used to execute steps related to information sending and receiving performed by the first device in any of the above methods, which may not be repeated herein.

FIG. 7b is a schematic diagram illustrating a structure of a second device according to an embodiment of the disclosure. As illustrated in FIG. 7b, the second device 104 includes a second determination module 1041. The second determination module 1041 is configured to determine a format for sending information by a first device, in which the first device sends the information upon excitation of a first signal of a second device. In some embodiments, the second determination module 1041 may be used to perform steps related to information determination performed by the second device in any of the above information indication methods, which is not be repeated herein. In some embodiments, the second device 104 further includes a second transceiver module, and the above second transceiver module is used to execute steps related to information sending and receiving performed by the second device in any of the above methods, which may not be repeated herein.

FIG. 8a is a schematic diagram illustrating a structure example of a communication device 8100 according to an embodiment of the disclosure. The communication device 8100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 8100 may be configured to implement the information indication method in the above method embodiments. For details, reference may be made to the description in the above method embodiments.

As shown in FIG. 8a, the communication device 8100 may include one or more processors 8101. The processor 8101 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU, or CU, etc.), execute a computer program, and process data of the computer program. The processor 8101 is configured to invoke instructions to enable the communication device 8100 to execute any of the above communication methods.

In some embodiments, the communication device 8100 may also include one or more memories 8102 for storing instructions. Optionally, all or some of the memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above method, and the processor 8101 performs at least one of other steps.

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 8100 further includes one or more interface circuits 8104. The interface circuit 8104 is connected to the memory 8102. The interface circuit 8104 may be configured to receive signals from the memory 8102 or other devices, and may be configured to send the signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the disclosure is not limited, and a structure of the communication device 8100 may not be limited by FIG. 8a. The communication device may be a stand-alone device or may be a part of a larger device. For example, the communication device may be the following: (1) a stand-alone integrated circuit (IC), or a chip, or a system on chip or a subsystem; (2) a set of one or more ICs, optionally, which may also include a storage component for storing data and a computer program; (3) an ASIC, such as a Modem; (4) a module that may be embedded within other devices; (5) a receiver, a terminal, a smart terminal device, a cellular phone, a wireless device, a handset, a mobile unit, a vehicle-mounted device, a network side device, a cloud device, an artificial intelligence device, etc.; (6) others, and so forth.

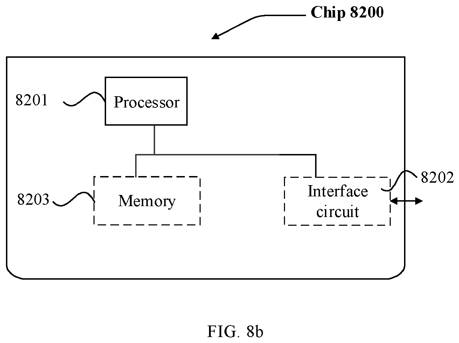

FIG. 8b is a schematic diagram illustrating a structure of a chip 8200 provided in an embodiment of the present disclosure. In a case where the communication device 8100 may be a chip or a chip system, reference may be made to the schematic diagram of the structure of the chip 8200 shown in FIG. 8b, but the present disclosure is not limited thereto.

The chip 8200 includes one or more processors 8201, and the one or more processors 8201 are used to call instructions to cause the chip 8200 to perform any of the above communication methods.

In some embodiments, the chip 8200 further includes one or more interface circuits 8202, the one or more interface circuits 8202 are connected to a memory 8203, the one or more interface circuits 8202 may be used to receive signals from the memory 8203 or other devices, and the one or more interface circuits 8202 may be used to send signals to the memory 8203 or other devices. For example, the one or more interface circuits 8202 may read the instructions stored in the memory 8203 and send the instructions to the processor 8201. Optionally, the terms such as interface circuit, interface, transceiver pin, transceiver, etc. may be replaced with each other.

In some embodiments, the chip 8200 further includes one or more memories 8203 for storing instructions. Optionally, all or part of the memories 8203 may be outside the chip 8200.

The disclosure also provides a storage medium for storing instructions. When the instructions are running on the communication device 8100, the communication device 8100 is caused to implement any one of the above methods. In an example, the above storage medium is an electronic storage medium. In an example, the above storage medium is a computer-readable storage medium, which is not limited herein. The above storage medium may also be a storage medium readable by other devices. In an example, the above storage medium may be a non-transitory storage medium, which is not limited to herein. The above storage medium may also be a transitory storage medium.

The disclosure also provides a program product. When the program product is executed by the communication device 8100, the communication device 8100 is caused to implement any one of the above methods. In an example, the above program product is a computer program product.

The disclosure also provides a computer program. When the computer program is running on a computer, the computer is caused to implement any one of the above methods.

Other implementations of the disclosure will be apparent to the skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It should be understood that, the disclosure is not limited to the exaction construction that has been described above and illustrated in the accompanying drawings, and that various modifications and changes may be made without departing from the scope thereof. The scope of the disclosure only is limited by the appended claims.

## Claims

1. An information indication method, comprising:
determining, by a first device, a format for sending information, wherein the first device sends the information upon excitation of a first signal of a second device.

2. The method according to claim 1, wherein data frames in different formats carry different information.

3. The method according to claim 2, wherein the format comprises at least one of:
a first format, wherein a data frame in the first format carries service information;
a second format, wherein a data frame in the second format carries control information;
a third format, wherein a data frame in the third format carries identification information;
a fourth format, wherein a data frame in the fourth format carries identification information and service information;
a fifth format, wherein a data frame in the fifth format carries identification information and control information;
a sixth format, wherein a data frame in the sixth format carries identification information, service information and control information; or
a seventh format, wherein a data frame in the seventh format carries service information and control information.

4. The method according to claim 2 or 3, wherein the data frame comprises:
an indicator, indicating the format.

5. The method according to claim 4, wherein the indicator further indicates a length of the data frame.

6. The method according to claim 4 or 5, wherein the indicator comprises: a first indicator;
wherein the first indicator indicates at least one of:
whether the data frame carries identification information;
an identification type of identification information carried by the data frame; or
a data length of identification information carried by the data frame.

7. The method according to any one of claims 4 to 6, wherein the indicator comprises: a second indicator;
wherein the second indicator indicates at least one of:
whether the data frame carries service information; or
a data length of service information carried by the data frame.

8. The method according to any one of claims 4 to 7, wherein the indicator comprises: a third indicator;
wherein the third indicator indicates at least one of:
whether the data frame carries control information; or
a format of control information carried by the data frame.

9. The method according to claim 8, wherein the format of the control information comprises at least one of:
an eighth format, wherein the control information in the eighth format carries acknowledgment (ACK) information or negative acknowledgment (NACK) information; or
a ninth format, wherein the control information the ninth format carries ACK information, or NACK information and a failure cause.

10. The method according to any one of claims 2 to 9, wherein determining, by the first device, the format for sending the information comprises:
determining the format of the data frame as determined by the first device itself; or
determining the format of the data frame as specified by the second device.

11. The method according to claim 10, wherein
the format of the data frame is determined by the first device itself, and the data frame sent by the first device at least comprises an indicator.

12. The method according to claim 11, wherein encoding of the indicator carried by the data frame is independent of encoding of information carried by the data frame.

13. The method according to claim 10, further comprising:
receiving indication information sent by the second device, wherein the indication information indicates the format of the data frame specified by the second device.

14. The method according to any one of claims 10 to 13, comprising:
determining the format of the data frame according to a protocol agreement;
or,
determining the format of the data frame according to a device type of the first device;
or,
determining the format of the data frame according to an application scenario of the first device.

15. An information indication method, comprising:
determining a format for sending information by a first device, wherein the first device sends the information upon excitation of a first signal of a second device.

16. The method according to claim 15, wherein different formats of data frames carry different information.

17. The method according to claim 16, wherein the format comprises at least one of:
a first format, wherein a data frame in the first format carries service information;
a second format, wherein a data frame in the second format carries control information;
a third format, wherein a data frame in the third format carries identification information;
a fourth format, wherein a data frame in the fourth format carries identification information and service information;
a fifth format, wherein a data frame in the fifth format carries identification information and control information;
a sixth format, wherein a data frame in the sixth format carries identification information, service information and control information; or
a seventh format, wherein a data frame in the seventh format carries service information and control information.

18. The method according to claim 16 or 17, wherein the data frame comprises:
an indicator, indicating the format.

19. The method according to claim 18, wherein the indicator further indicates a length of the data frame.

20. The method according to claim 18 or 19, wherein the indicator comprises: a first indicator;
wherein the first indicator indicates at least one of:
whether the data frame carries identification information;
an identification type of identification information carried by the data frame; or
a data length of identification information carried by the data frame.

21. The method according to any one of claims 18 to 20, wherein the indicator comprises: a second indicator;
wherein the second indicator indicates at least one of:
whether the data frame carries service information; or
a data length of service information carried by the data frame.

22. The method according to any one of claims 18 to 21, wherein the indicator comprises: a third indicator;
wherein the third indicator indicates at least one of:
whether the data frame carries control information; or
a format of control information carried by the data frame.

23. The method according to claim 22, wherein the format of the control information comprises at least one of:
an eighth format, wherein the control information in the eighth format carries acknowledgment (ACK) information or negative acknowledgment (NACK) information; or
a ninth format, wherein the control information in the ninth format carries ACK information, or NACK information and a failure cause.

24. The method according to any one of claims 16 to 23, wherein determining the format for sending information by the first device comprises:
determining the format of the data frame as determined by the first device itself; or
determining the format of the data frame as specified by the second device.

25. The method according to claim 24, wherein determining the format for sending information by the first device comprises:
determining the format of the data frame based on an indicator in the data frame, wherein the format of the data frame is determined by the first device itself.

26. The method according to claim 25, wherein encoding of the indicator carried by the data frame is independent of encoding of contents carried by the data frame.

27. The method according to claim 24, further comprising:
sending indication information to the first device, wherein the indication information indicates the format of the data frame specified by the second device.

28. The method according to any one of claims 24 to 27, wherein determining the format for sending information by the first device comprises:
determining the format of the data frame according to a protocol agreement;
or,
determining the format of the data frame according to a device type of the first device;
or,
determining the format of the data frame according to an application scenario of the first device.

29. An information indication method, comprising:
a first device determining a format for sending information, wherein the first device sends the information upon excitation of a first signal of a second device.

30. A first device, comprising:
a first determination module, configured to determine a format for sending information, wherein the first device sends the information upon excitation of a first signal of a second device.

31. A second device, comprising:
a second determination module, configured to determine a format for sending information by a first device, wherein the first device sends the information upon excitation of a first signal of the second device.

32. A communication system, comprising: a first device and a second device; wherein the first device is configured to implement the information indication method according to any one of claims 1 to 14, and the second device is configured to implement the information indication method according to any one of claims 15 to 28.

33. A communication device, comprising:
one or more processors;
wherein the one or more processors are configured to call instructions to cause the communication device to perform the information indication method according to any one of claims 1 to 14 or any one of claims 15 to 28.

34. A storage medium, storing instructions that, when executed on a communication device, cause the communication device to perform the information indication method according to any one of claims 1 to 14 or any one of claims 15 to 28.
